# EUROPÄISCHE PATENTSCHRIFT

(11) **EP 1 921 472 B1**
(45) Veröffentlichungstag und Bekanntmachung des Hinweises auf die Patenterteilung: **22.03.2017**
(21) Anmeldenummer: 07020674.3
(22) Anmeldetag: 23.10.2007
(51) Int. Cl.: G02B 6/00

(54) **Lichtwellenleiterverteilereinrichtung**
Optical fibre distributor
Dispositif de distribution de fibres optiques

(30) Priorität: 10.11.2006 DE 202006017297 U
(43) Veröffentlichungstag der Anmeldung: 14.05.2008
(73) Patentinhaber: CCS Technology, Inc., Wilmington, DE 19803 (US)
(72) Erfinder: Müller, Michael, Dipl.-Ing., 58706 Menden (DE); Iwanek, Waldemar, Dipl.-Ing., 59302 Oelde (DE)
(74) Vertreter: Sturm, Christoph

(56) Entgegenhaltungen:
- EP-A- 0 505 710
- EP-A- 1 026 530
- EP-A- 1 293 815
- EP-A- 1 333 303
- WO-A-96/10203
- WO-A-97/19377
- DE-A1- 19 956 067
- DE-U1-202005 019 319
- US-A- 5 142 606
- US-A- 5 778 131

## Beschreibung

Die Erfindung betrifft eine Lichtwellenleiterverteilereinrichtung nach dem Oberbegriff des Anspruchs 1.

Aus der DE 20 2005 019 319 ist ein Einbauelement für ein Kabelverzweigergehäuse bzw. ein Straßenverteilergehäuse bekannt, wobei auf einer Vorderwand eines Grundkörpers des dort offenbarten Einbauelements eine mehrere Spleißkassetten aufweisende Lichtwellenleiterverteilereinrichtung montiert ist. Die dort gezeigte Lichtwellenleiterverteilereinrichtung umfasst zwei nebeneinander angeordnete Spleißkassettenhalter, wobei in jedem der Spleißkassettenhalter mehrere Spleißkassetten stapelförmig übereinander sowie schwenkbar gelagert werden können. Die Spleißkassetten jedes Spleißkassettenhalters bilden so einen Spleißkassettenstapel. Jedem Spleißkassettenhalter ist eine Lichtwellenleiteraufteilungseinrichtung zugeordnet, die sich unterhalb des Spleißkassettenhalters an denselben anschließt. Jede der Lichtwellenleiteraufteilungseinrichtungen verfügt an einem unteren Ende über erste Durchführungsbereiche für zu Bündeladern zusammengefasste Lichtwellenleiter und an einem oberen Ende über zweite Durchführungsbereiche für lose Lichtwellenleiter. Lose Lichtwellenleiter können über die zweiten Durchführungsbereiche von einer Lichtwellenleiteraufteilungseinrichtung in einen Lichtwellenleiterführungskanal des sich an die Lichtwellenleiteraufteilungseinrichtung anschließenden Spleißkassettenhalters überführt werden, wobei die losen Lichtwellenleiter über die Lichtwellenleiterführungskanäle der Spleißkassettenhalter den in dem jeweiligen Spleißkassettenhalter aufgenommenen Spleißkassetten zugeführt werden können.

Bei der aus der DE 20 2005 019 319 bekannten Lichtwellenleiterverteilereinrichtung bereitet die Überführung von losen Lichtwellenleitern zwischen den Spleißkassetten benachbarter Spleißkassettenstapel Schwierigkeiten. Bei der dort offenbarten Lichtwellenleiterverteilereinrichtung besteht keine Möglichkeit, lose Lichtwellenleiter einfach und sicher ohne die Gefahr von Beschädigungen derselben zwischen den Spleißkassetten benachbarter Spleißkassettenstapel zu überführen.

Aus der WO 96/10203 A ist ein Spleißkassettenstapel mit einem Spleißkassettenhalter und mehreren im Spleißkassettenhalter übereinander angeordneten sowie in dem Spleißkassettenhalter schwenkbar gelagerten Spleißkassetten bekannt. An den Spleißkassettenhalter schließt sich nach der WO 96/10203 A eine Lichtwellenleiteraufteilungseinrichtung an, an der Lichtwellenleiterbündeladern oder Lichtwellenleiterkabel abfangbar sind, wobei die Lichtwellenleiter der abgefangenen Lichtwellenleiterbündeladern oder der abgefangenen Lichtwellenleiterkabel den Spleißkassetten des Spleißkassettenhalters zuführbar sind.

Hiervon ausgehend liegt der vorliegenden Erfindung das Problem zu Grunde, eine neuartige Lichtwellenleiterverteilereinrichtung zu schaffen.

Dieses Problem wird durch eine Lichtwellenleiterverteilereinrichtung mit den Merkmalen des Anspruchs 1 gelöst.

Erfindungsgemäß ist zwischen jeweils zwei unmittelbar benachbarten Spleißkassettenhaltern eine Lichtwellenleiterüberführungseinrichtung positioniert, um lose Lichtwellenleiter geschützt sowie unter Einhaltung zulässiger Mindestbiegeradien zwischen unmittelbar benachbarten Spleißkassettenhaltern und damit den in den Spleißkassettenhaltern stapelförmig angeordneten Spleißkassetten zu überführen. Die Lichiwellenleiterüberführungseinrichtung verläuft dabei zwischen zwei benachbarten Spleißkassettenhaltern in einem Bereich zwischen den entsprechenden Spleißkassettenstapeln und der jeweiligen Lichtwellenleiteraufteilungseinrichtung. Insofern können bei der erfindungsgemäßen Lichtwellenleiterverteilereinrichtung lose Lichtwellenleiter zwischen benachbarten Spleißkassettenstapeln überführt werden, ohne dass die Gefahr besteht, dass die losen Lichtwellenleiter beschädigt werden.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Lichtwellenleiterverteilereinrichtung im Sinne der hier vorliegenden Erfindung in Vorderansicht;
- Fig. 2: ein Detail der erfindungsgemäßen Lichtwellenleiterverteilereinrichtung der Fig. 1 in perspektivischer Rückansicht; und
- Fig. 3: das Detail der Fig. 2 in perspektivischer Vorderansicht.

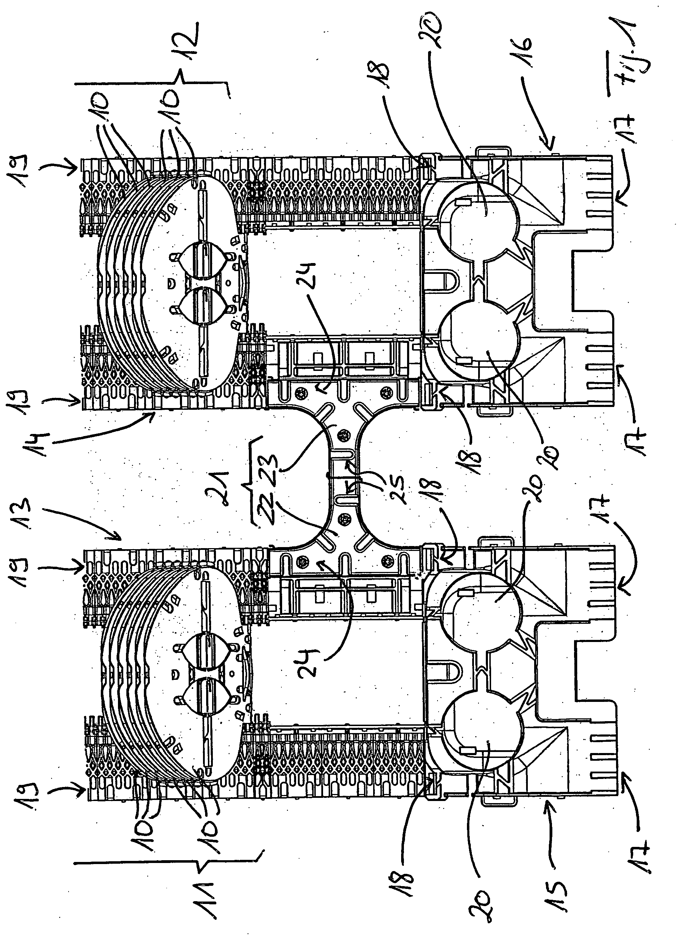

Nachfolgend wird die hier vorliegende Erfindung unter Bezugnahme auf Fig. 1 bis 3 in größerem Detail beschrieben.

Fig. 1 zeigt ein bevorzugtes Ausführungsbeispiel einer erfindungsgemäßen Lichtwellenleiterverteilereinrichtung, die mehrere Spleißkassetten 10 umfasst, wobei die Spleißkassetten 10 in Form von zwei nebeneinander angeordneten Spleißkassettenstapeln 11, 12 gruppiert sind. Die Spleißkassetten 10 jedes Spleißkassettenstapels 11, 12 sind in einem Spleißkassettenhalter 13 bzw. 14 übereinander angeordnet und in dem jeweiligen Spleißkassettenhalter 13 bzw. 14 schwenkbar gelagert.

Unterhalb jedes Spleißkassettenhalters 13, 14 schließt sich jeweils eine Lichtwellenleiteraufteilungseinrichtung 15 bzw. 16 an den jeweiligen Spleißkassettenhalter 13 bzw. 14 an.

Jede Lichtwellenleiteraufteilungseinrichtung 15 verfügt an einem unteren Ende über erste Durchführungsbereiche 17 für zu Lichtwellenleiterbündeladern zusammengefasste Lichtwellenleiter und an einem oberen Ende über zweite Durchführungsbereiche 18 für lose Lichtwellenleiter. Im Bereich der ersten Durchführungsbereiche 17 können an der jeweiligen Lichtwellenleiteraufteilungseinrichtung 15 Lichtwellenleiterbündeladern abgefangen werden. Über die zweiten Durchführungsbereiche 18 sind lose Lichtwellenleiter aus der jeweiligen Lichtwellenleiteraufteilungseinrichtung 15 bzw. 16 abführbar und in Lichtwellenleiterführungskanäle 19 der Spleißkassettenhalter 13 bzw. 14 einführbar.

Die Lichtwellenleiterführungskanäle 19 der Spleißkassettenhalter 13 bzw. 14 erstrecken sich zu beiden Seiten der Spleißkassetten 10, wobei über diese Lichtwellenleiterführungskanäle 19 die losen Lichtwellenleiter den Spleißkassetten 10 der Spleißkassettenstapel 11 bzw. 12 zugeführt werden können. Gemäß Fig. 1 verfügt jede Lichtwellenleiteraufteilungseinrichtung 15 bzw. 16 zwischen den ersten Durchführungsbereichen 17 und den zweiten Durchführungsbereichen 18 über Führungstrommeln 20, die der Handhabung von Überlängen der Lichtwellenleiter dienen.

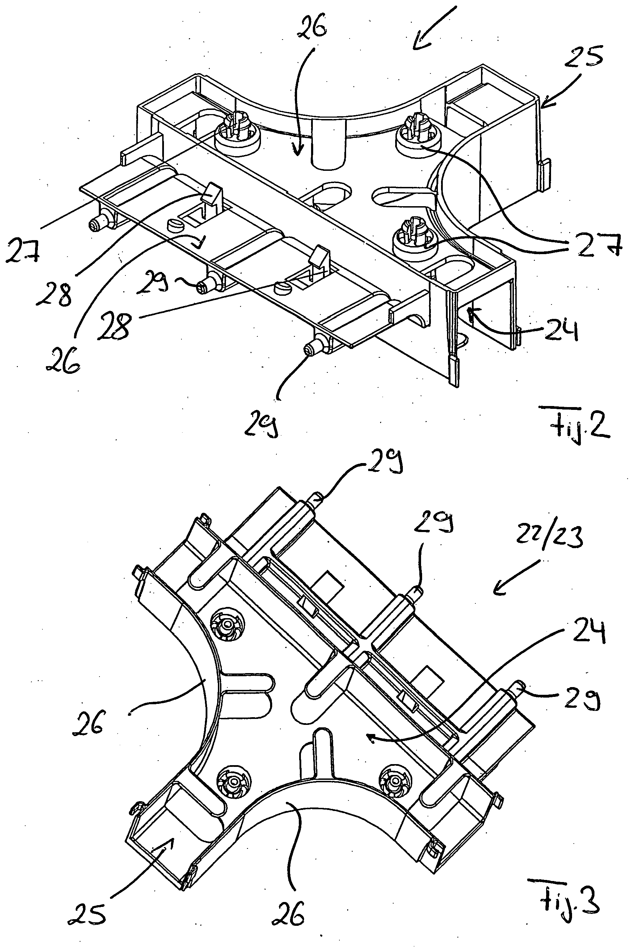

Um lose Lichtwellenleiter zwischen den Spleißkassetten 10 der beiden Spleißkassettenstapel 11 und 12 geschützt ohne die Gefahr von Beschädigungen derselben überführen zu können, ist im Sinne der hier vorliegenden Erfindung zwischen den unmittelbar benachbarten Spleißkassettenhaltern 13, 14 der beiden Spleißkassettenstapel 11, 12 eine Lichtwellenleiterüberführungseinrichtung 21 positioniert, die im bevorzugten Ausführungsbeispiel von zwei T-förmigen Lichtwellenleiterführungselementen 22 und 23 gebildet ist. Fig. 2 und 3 zeigen ein derartiges T-förmiges Lichtwellenleiterführungselement in Alleindarstellung.

Die von den beiden T-förmigen Lichtwellenleiterführungselementen 22 und 23 gebildete Lichtwellenleiterüberführungseinrichtung 21 ist dabei in einem Bereich zwischen dem jeweiligen Spleißkassettenstapel 11, 12 und der jeweiligen Lichtwellenleiteraufteilungseinrichtung 15 bzw. 16 positioniert.

Im gezeigten Ausführungsbeispiel der Fig. 1 können demnach lose Lichtwellenleiter ausgehend von der linken Lichtwellenleiteraufteilungseinrichtung 15 entweder über die Lichtwellenleiterführungskanäle 19 des linken Spleißkassettenhalters 13 dem linken Spleißkassettenstapel 11 oder über die Lichtwellenleiterüberführungseinrichtung 21 und die Lichtwellenleiterführungskanäle 19 des rechten Spleißkassettenhalters 14 dem rechten Spleißkassettenstapel 12 zugeführt werden. Ebenso können ausgehend von der rechten Lichtwellenleiteraufteilungseinrichtung 16 lose Lichtwellenleiter entweder über die Lichtwellenleiterführungskanäle 19 des rechten Spleißkassettenhalters 14 dem rechten Spleißkassettenstapel 12 oder über die Lichtwellenleiterüberführungseinrichtung 21 und die Lichtwellenleiterführungskanäle 19 des linken Spleißkassettenhalters 13 dem linken Spleißkassettenstapel 11 zugeführt werden.

Die zwischen den beiden Spleißkassettenstapeln 11, 12 bzw. zwischen den beiden Spleißkassettenhaltern 13 bzw. 14 zu überführenden, losen Lichtwellenleiter werden in der Lichtwellenleiterüberführungseinrichtung 21 geführt und geschützt, so dass keine Gefahr besteht, dass diese Lichtwellenleiter bei der Überführung zwischen den beiden Spleißkassettenhaltern 13, 14 beschädigt werden.

Wie bereits ausgeführt, wird im gezeigten Ausführungsbeispiel die Lichtwellenleiterüberführungseinrichtung 21 von zwei T-förmigen Lichtwellenleiterführungselementen 22 und 23 gebildet, wobei jedem Spleißkassettenhalter 13, 14 eines der beiden T-förmigen Lichtwellenleiterführungselemente 22, 23 zugeordnet ist.

So verfügt jedes der beiden T-förmigen Lichtwellenleiterführungselemente 22, 23 über jeweils einen Basisabschnitt 24, der in montiertem Zustand des jeweiligen Lichtwellenleiterführungselements 22, 23 einen Lichtwellenleiterführungskanal 19 des jeweiligen Spleißkassettenhalters 13, 14 ergänzt.

Neben diesem Basisabschnitt 24 verfügt jedes der beiden T-förmigen Lichtwellenleiterführungselemente 22, 23 weiterhin über einen gegenüber dem Basisabschnitt 24 abgewinkelten Überführungsabschnitt 25, wobei der Überführungsabschnitt 25 gegenüber dem jeweiligen Basisabschnitt 24 um 90° abgewinkelt ist.

Im bevorzugten Ausführungsbeispiel der Fig. 1 ergänzen sich die Überführungsabschnitte 25 der beiden T-förmigen Lichtwellenleiterführungselemente 22 und 23 unmittelbar. Es sei darauf hingewiesen, dass zwischen den beiden Überführungsabschnitten 25 jedoch auch ein geradlinig oder gekrümmt verlaufender Zwischenabschnitt angeordnet sein kann.

Gemäß Fig. 3 verfügt jedes der T-förmigen Lichtwellenleiterführungselemente 22, 23 über gekrümmte Wände 26, welche sich zwischen dem Basisabschnitt 24 und dem Überführungsabschnitt 25 des jeweiligen Lichtwellenleiterführungselements 22, 23 erstrecken. Diese gekrümmten Wände 26 sind dabei derart konturiert, dass an denselben lose Lichtwellenleiter unter Einhaltung zulässiger Mindestbiegeradien führbar sind.

Wie am besten Fig. 2 entnommen werden kann, sind einer Bodenwand 26 eines jeden Lichtwellenleiterführungselements 22, 23 unterschiedliche Rastelemente zugeordnet. Erste Rastelemente 27 dienen der Befestigung bzw. Verankerung der T-förmigen Lichtwellenleiterführungselemente 22, 23 an einem Träger für die Spleißkassettenhalter 13, 14. Zweite Rastelemente 28 dienen der Befestigung des jeweiligen T-förmigen Lichtwellenleiterführungselements 22, 23 am entsprechenden Spleißkassettenhalter 13, 14.

Gemäß Fig. 2, 3 sind jedem T-förmigen Lichtwellenleiterführungselement 22, 23 benachbart zum Basisabschnitt 24 Führungsstifte 29 zugeordnet, die in montiertem Zustand in entsprechende Ausnehmungen des entsprechenden Spleißkassettenhalters 13, 14 eingreifen und der Ausrichtung der T-förmigen Lichtwellenleiterführungselemente 22, 23 relativ zu dem jeweiligen Spleißkassettenhalter 13, 14 dienen.

### Bezugszeichenliste

- 10: Spleißkassette
- 11: Spleißkassettenstapel
- 12: Spleißkassettenstapel
- 13: Spleißkassettenhalter
- 14: Spleißkassettenhalter
- 15: Lichtwellenleiteraufteilungseinrichtung
- 16: Lichtwellenleiteraufteilungseinrichtung
- 17: erster Durchführungsbereich
- 18: zweiter Durchführungsbereich
- 19: Lichtwellenleiterführungskanal
- 20: Führungstrommeln
- 2.1: Lichtwellenleiterüberführungseinrichtung
- 22: Lichtwellenleiterführungselement
- 23: Lichtwellenleiterführungselement
- 24: Basisabschnitt
- 25: Überführungsabschnitt
- 26: Bodenwand
- 27: Rastelement
- 28: Rastelement
- 29: Führungsstift

## Patentansprüche

1. Lichtwellenleiterverteilereinrichtung, mit mindestens zwei nebeneinander angeordneten Spleißkassettenstapeln(11, 12), wobei jeder Spleißkassettenstapel (11, 12) mehrere in einem Spleißkassettenhalter (13, 14) übereinander abgeordnete sowie in dem Spleißkassettenhalter (13, 14) schwenkbar gelagerte Spleißkassetten (10) umfasst, wobei an jeden Spleißkassettenhalter (13, 14) eine Lichtwellenleiteraufteilungseinrichtung (15, 16) angrenzt ist, an der Lichtwellenleiterbündeladern und/oder Lichtwellenleiterkabel abfangbar sind und über die Lichtwellenleiter in Lichtwellenleiterführungskanäle des jeweiligen Spleißkassettenhalters (13, 14) einführbar sind, um so Lichtwellenleiter ausgehend von der einem Spleißkassettenhalter (13, 14) zugeordneten Lichtwellenleiteraufteilungseinrichtung (15, 16) den Spleißkassetten (10) des jeweiligen Spleißkassettenhalters (13, 14) zuzuführen, wobei zumindest zwischen zwei unmittelbar benachbarten Spleißkassettenhaltern (13, 14) in einem Bereich zwischen dem jeweiligen Spleißkassettenstapel (11, 12) und der jeweiligen Lichtwellenleiteraufteilungseinrichtung (15, 16) eine Lichtwellenleiterüberführungseinrichtung (21) positioniert ist, um Lichtwellenleiter zwischen den Spleißkassettenstapeln (11, 12) der unmittelbar benachbarten Spleißkassettenhalter (13, 14) zu überführen, **dadurch gekennzeichnet dass** die zwischen zwei unmittelbar benachbarten Spleißkassettenhaltern (13, 14) verlaufende Lichtwellenleiterüberführungseinrichtung (21) von zwei T-förmigen Lichtwellenleiterführungselementen (22, 23) gebildet ist, wobei jedem Spleißkassettenhalter eine der T-förmigen Lichtwellenleiterführungselemente (22, 23) zugeordnet ist, und wobei jedes der T-förmigen Lichtwellenleiterführungselemente (22, 23) jeweils einen Basisabschnitt (24) aufweist, der einen Lichtwellenleiterführungskanal (19) des jeweiligen Spleißkassettenhalters ergänzt.

2. Lichtwellenleiterverteilereinrichtung nach Anspruch 1, **dadurch gekennzeichnet, dass** jedes der T-förmigen Lichtwellenleiterführungselemente (22, 23) jeweils einen gegenüber dem Basisabschnitt (24) abgewinkelten Überführungsabschnitt (25) aufweist, wobei sich die Überführungsabschnitte (25) der beiden T-förmigen Lichtwellenleiterführungselemente (22, 23) ergänzen.

3. Lichtwellenleiterverteilereinrichtung nach Anspruch 2, **dadurch gekennzeichnet, dass** Wände (36) jedes T-förmigen Lichtwellenleiterführungselemente (22, 23) in einem Übergangabschnitt zwischen dem Basisabschnitt (24) und dem Überführungsabschnitt (25) derart konturiert sind, dass an denselben Lichtwellenleiter unter Einhaltung zulässiger Mindestbiegeradien führbar sind.

4. Lichtwellenleiterverteilereinrichtung nach einem oder mehreren der Ansprüche 1 bis 3, **dadurch gekennzeichnet, dass** einer Bodenwand (26) jedes T-förmigen Lichtwellenleiterführungselements Rastelemente (27, 28) zugeordnet sind, um die T-förmigen Lichtwellenleiterführungselement an den jeweiligen Spleißkassettenhaltern (13, 14) und/oder einem Träger für die Spleißkassettenhaltern zu befestigen.

5. Lichtwellenleiterverteilereinrichtung nach einem oder mehreren der Ansprüche 1 bis 4, **dadurch gekennzeichnet, dass** jedes T-förmige Lichtwellenleiterführungselement (22, 23) Führungsstifte (29) aufweist, die in Ausnehmungen eines Spleißkassettenhalters einführbar sind, um so die T-förmigen Lichtwellenleiterführungselement relativ zu dem jeweiligen Spleißkassettenhalter auszurichten.

## Claims

1. Optical waveguide distribution device, comprising at least two splicing cassette stacks (11, 12) which are arranged next to one another, wherein each splicing cassette stack (11, 12) comprises a plurality of splicing cassettes (10) which are disposed one above the other in a splicing cassette holder (13, 14) and are pivotably mounted in the splicing cassette holder (13, 14), wherein an optical waveguide splitting device (15, 16) adjoins each splicing cassette holder (13, 14), it being possible for buffered optical waveguide fibres and/or optical waveguide cables to be captured at the said optical waveguide splitting device and it being possible for optical waveguides to be inserted into optical waveguide guide channels of the respective splicing cassette holder (13, 14) by means of the said optical waveguide splitting device, in order to in this way supply optical waveguides, starting from the optical waveguide splitting device (15, 16) which is associated with one splicing cassette holder (13, 14), to the splicing cassettes (10) of the respective splicing cassette holder (13, 14), wherein an optical waveguide transfer device (21) is positioned at least between two directly adjacent splicing cassette holders (13, 14) in a region between the respective splicing cassette stack (11, 12) and the respective optical waveguide splitting device (15, 16) in order to transfer optical waveguides between the splicing cassette stacks (11, 12) of the directly adjacent splicing cassette holders (13, 14), **characterized in that** the optical waveguide transfer device (21), which runs between two directly adjacent splicing cassette holders (13, 14), is formed by two T-shaped optical waveguide guide elements (22, 23), wherein one of the T-shaped optical waveguide guide elements (22, 23) is associated with each splicing cassette holder, and wherein each of the T-shaped optical waveguide guide elements (22, 23) has in each case one base section (24) which supplements an optical waveguide guide channel (19) of the respective splicing cassette holder.

2. Optical waveguide distribution device according to Claim 1, **characterized in that** each of the T-shaped optical waveguide guide elements (22, 23) has in each case one transfer section (25) which is bent in relation to the base section (24), wherein the transfer sections (25) of the two T-shaped optical waveguide guide elements (22, 23) supplement one another.

3. Optical waveguide distribution device according to Claim 2, **characterized in that** walls (36) of each T-shaped optical waveguide guide element (22, 23) are contoured in a transition section between the base section (24) and the transfer section (25) in such a way that optical waveguides can be guided against said walls while maintaining permissible minimum bending radii.

4. Optical waveguide distribution device according to one or more of Claims 1 to 3, **characterized in that** latching elements (27, 28) are associated with a bottom wall (26) of each T-shaped optical waveguide guide element in order to fasten the T-shaped optical waveguide guide elements on the respective splicing cassette holders (13, 14) and/or a mount for the splicing cassette holders.

5. Optical waveguide distribution device according to one or more of Claims 1 to 4, **characterized in that** each T-shaped optical waveguide guide element (22, 23) has guide pins (29) which can be inserted into cutouts in a splicing cassette holder in order to in this way align the T-shaped optical waveguide guide elements relative to the respective splicing cassette holder.

## Revendications

1. Dispositif de distribution de fibres optiques, comportant au moins deux empilements de cassettes d'épissure (11, 12) disposées côte à côte, dans lequel chaque empilement de cassettes d'épissure (11, 12) comprend plusieurs cassettes d'épissures (10) empilées l'une sur l'autre dans un support de cassettes d'épissure (13, 14) et montées de manière pivotante dans le support de cassettes d'épissure (13, 14), dans lequel un dispositif de distribution de fibres optiques (15, 16) est adjacent à chaque support de cassettes d'épissure (13, 14), sur lequel des brins de faisceaux de fibres optiques et/ou des câbles de fibres optiques peuvent être retenus et par l'intermédiaire desquels les fibres optiques peuvent être introduites dans des canaux de guidage de fibres optiques du support de cassettes d'épissure (13, 14) respectif afin d'acheminer ainsi des fibre optiques depuis le dispositif de distribution de fibres optiques (15, 16) associé à un support de cassettes d'épissure (13, 14) vers les cassettes d'épissure (10) du support de cassettes d'épissure (13, 14) respectif, dans lequel au moins un dispositif de transfert de fibres optiques (21) est positionné entre deux supports de cassettes d'épissure (13, 14) immédiatement voisins dans une région située entre l'empilement de cassettes d'épissure (11, 12) respectif et le dispositif de distribution de fibres optiques (15, 16) respectif afin de transférer des fibres optiques entre les empilements de cassettes d'épissure (11, 12) des supports de cassettes d'épissure (13, 14) immédiatement voisins, **caractérisé en ce que** le dispositif de transfert de fibres optiques (21) s'étendant entre deux empilements de cassettes d'épissure (13, 14) immédiatement voisins est formé de deux éléments de guidage de fibres optiques en T (22, 23), dans lequel l'un des éléments de guidage de fibres optiques en T (22, 23) est associé à chaque support de cassettes d'épissure et dans lequel chacun des éléments de guidage de fibres optiques en T (22, 23) comporte respectivement une section de base (24) qui complète un canal de guidage de fibres optiques (19) du support de cassettes d'épissure respectif.

2. Dispositif de distribution de fibres optiques selon la revendication 1, **caractérisé en ce que** chacun des éléments de guidage de fibres optiques en T (22, 23) comporte respectivement une section de transfert (25) respective formant un angle par rapport à la section de base (24), dans lequel les sections de transfert (25) des deux éléments de guidage de fibres optiques en T (22, 23) se complètent.

3. Dispositif de distribution de fibres optiques selon la revendication 2, **caractérisé en ce que** des parois (36) de chaque élément de guidage de fibres optiques en T (22, 23) présente, dans une section de transition entre la section de base (24) et la section de transfert (25), un contour tel que des fibre optiques puissent être acheminées vers celui-ci en respectant un rayon de courbure minimum admissible.

4. Dispositif de distribution de fibres optiques selon l'une ou plusieurs des revendications 1 à 3, **caractérisé en ce que** des éléments de verrouillage (27, 28) sont associés à une paroi de fond (26) de chaque élément de guidage de fibres optiques en T afin de fixer l'élément de guidage de fibres optiques en T aux supports de cassettes d'épissure (13, 14) respectifs et/ou à un support destiné à maintenir les supports de cassettes d'épissure.

5. Dispositif de distribution de fibres optiques selon l'une ou plusieurs des revendications 1 à 4, **caractérisé en ce que** chaque élément de guidage de fibres optiques en T (22, 23) comporte des tiges de guidage (29) qui peuvent être introduites dans des évidements d'un support de cassettes d'épissure afin d'orienter ainsi l'élément de guidage de fibres optiques en T par rapport au support de cassettes d'épissure respectif.
